# EUROPÄISCHE PATENTANMELDUNG

(11) **EP 1 574 374 A2**
(43) Veröffentlichungstag der Anmeldung: **14.09.2005**
(21) Anmeldenummer: 05004879.2
(22) Anmeldetag: 05.03.2005
(51) Int. Cl.: B60J 5/10, B60J 10/08

(54) **Übergangsbereich zwischen einer Scheibe und einer beabstandet angrenzenden Klappe eines Kraftfahrzeuges**

(30) Priorität: 11.03.2004 DE 102004011819
(71) Anmelder: DaimlerChrysler AG, 70567 Stuttgart (DE)
(72) Erfinder: Bürklen, Heinz, 72218 Wildberg (DE); Melchger, Nicolai, 72218 Wildberg (DE)

(57) **Zusammenfassung**

Ein Übergangsbereich zwischen einer Scheibe (1) und einer beabstandet angrenzenden Klappe (2) eines Kraftfahrzeuges, insbesondere einer Heck-Scheibe und Heckklappe, mit einem gegenüber der geschlossenen Klappe (2) durch eine erste Dichtung (4) gedichteten Wasserführungskanal (3) und einem über die erste Dichtung (4) gegenüber der Scheibe (1) auskragenden Klappenrand (6) mit einem zwischen diesem Klappenrand (6) und der Scheibe (1) bestehenden, den Wasserführungskanal (3) mit den Außenbereichen der Scheibe (1) verbindenden Spalt (7), soll fahrgeräuschmindernd ausgestaltet werden. Bei einer in diesem Bereich vorzusehenen Dichtung soll diese bei Vereisung zerstörungsfrei geöffnet werden können.

Zu diesem Zweck weist ein solcher Übergangsbereich folgende Merkmale auf
- der zwischen dem Klappenrand (6) und der Scheibe (1) liegende Spalt (7) ist bei geschlossener Klappe (2) durch eine zweite Dichtung (8) in einem zwischen den Längsenden des Spaltes (7) liegenden Spaltbereich, der zumindest einen Teilbereich der gesamten Spaltweite erfasst, verschlossen,
- die zweite Dichtung (8) schließt dicht an den von der Scheibe (1) gebildeten Spaltrand an,
- die zweite Dichtung (8) ist in Richtung von der Scheibe (1) zum Wasserführungskanal (3) hin gegenüber dem auskragenden Klappenrand (6) ansteigend ausgebildet.

## Beschreibung

Die Erfindung betrifft einen Übergangsbereich zwischen einer Scheibe und einer beabstandet angrenzenden Klappe eines Kraftfahrzeuges, insbesondere einer Heck-Scheibe und Heck-Klappe nach dem Oberbegriff des Patentanspruchs 1.

Ein solcher Übergangsbereich an einer Heckpartie eines Kraftfahrzeuges ist aus DE 43 02 547 A1 bekannt.

Die Erfindung beschäftigt sich bei einem gattungsgemäßen Übergangsbereich in erster Linie mit dem Problem, in diesem Übergangsbereich - wenn er sich im Heckbereich eines Fahrzeuges befindet - während des Fahrzeugbetriebes, insbesondere bei hohen Fahrgeschwindigkeiten, auftretende Fahrgeräusche zu vermeiden. Sofern sich in dem gattungsgemäßen Übergangsbereich zwischen der Scheibe und dem Klappenrand eine bei geschlossener Klappe dichtende Dichtung befindet, soll sichergestellt sein, dass bei Frost und insbesondere Vorhandensein von Schnee und/oder Eis bei einem Öffnen der Klappe das Dichtsystem nicht beschädigt wird.

In erster Linie gelöst wird dieser Problemkomplex durch die Ausbildung eines gattungsgemäßen Übergangsbereiches zwischen einer Scheibe und einer beabstandet angrenzenden Klappe nach den kennzeichnenden Merkmalen des Patentanspruchs 1.

Vorteilhafte und zweckmäßige Ausgestaltungen der Erfindung sind Gegenstand der Unteransprüche.

Die Erfindung beruht auf dem allgemeinen Gedanken, den Spalt zwischen Scheibe und Klappenrand als Ursache für die Geräuschbildung erkannt zu haben und diesen durch eine am scheibenseitigen Spaltrand angebrachte Dichtung zumindest mit Bezug auf die Spaltweite weitestgehend zu verschließen. Dabei besteht ein wichtiger Aspekt darin, den geringsten Abstand zwischen der Dichtung und dem Klappenrand in einem dem Wasserführungskanal zugewandten Bereich vorzusehen und in Richtung der Scheibe einen größeren Abstand zwischen Dichtung und Klappenrand vorzusehen. Dies kann insbesondere durch eine stufenförmige Ausbildung der an der Scheibe vorgesehenen Dichtung, das heißt der erfindungsgemäßen zweiten Dichtung, erreicht werden.

In dem an den Wasserführungskanal angrenzenden Bereich kann die zweite Dichtung in einer besonderen Ausgestaltung der Erfindung dicht an dem Klappenrand anliegen.

Die zweite Dichtung besitzt jeweils von den Längsenden des Spaltes zwischen Scheibe und Klappenrand einen Abstand. Dieser Abstand ist notwendig, um über die zweite Dichtung von der Scheibe abfließendes Wasser in den Wasserführungskanal einleiten zu können.

Als Maßnahme zur Vermeidung spaltbedingter Fahrgeräusche ist an sich ein vollständiges Verschließen des Spaltes durch die zweite Dichtung die wirkungsvollste Maßnahme. Allerdings besteht bei einem solchen vollständigen Verschließen die Gefahr, dass an der Dichtung gefrierendes Wasser oder gefrierender Schnee bei einem Öffnen der Klappe zu einer Beschädigung bis zu einem Abreißen der Dichtung führen kann. Zur Vermeidung dieser Gefahr dient die von der Scheibe zum Wasserführungskanal hin ansteigende Höhe der zweiten Dichtung in Spaltrichtung. Durch eine solche Formgebung kann insbesondere eine den Spalt durchdringende Schneefront von der eigentlichen Dichtfläche zwischen zweiter Dichtung und Klappenrand ferngehalten werden. Dabei wirkt der niedrigere Bereich der zweiten Dichtung als eine Art Barriere im Sinne eines Schneezaunes. Die vorgenannte "Abhaltewirkung" wird besonders gut bei einer stufenförmigen Ausbildung des Querschnittes der zweiten Dichtung erreicht. Eine Steigerung dieser Wirkung kann darüber hinaus durch eine Art Sägezahnprofil der Dichtung mit von der Scheibe in Richtung des Wasserführungskanales hin zunehmender Sägezahnhöhe erreicht werden. Zunehmende Sägezahnhöhe bedeutet hier, dass die in der vorgenannten Richtung aufeinanderfolgenden Zähne höhenmäßig ansteigen, wobei in Spaltlängsrichtung jeder "Sägezahn" möglichst eine gleichbleibende Höhe besitzt.

In der Praxis hat sich gezeigt, dass bereits eine optimale Wirkung durch ein Zweistufenprofil bzw. ein Profil mit zwei aufeinanderfolgenden Sägezähnen erreicht wird.

Mit Bezug auf die erfindungsgemäß angestrebte Spaltverkleinerung kann zusätzlich zu der zweiten Dichtung an der Scheibe auch an dem Klappenrand ein spaltverkleinerndes Bauelement, insbesondere ein Dichtungssteg, vorgesehen sein. Dieser Dichtungssteg kann in der Form einer dritten Dichtung derart ausgerichtet und dimensioniert sein, dass bei geschlossener Klappe die zweite und dritte Dichtung sich überlappen. Die Überlappung erfolgt dabei derart, dass die zweite Dichtung im Überlappungsbereich dem Wasserführungskanal zugewandt und die dritte Dichtung in diesem Bereich der Scheibe zugewandt ist. In dem Überlappungsbereich muss keine direkt dichte Anlage zwischen zweiter und dritter Dichtung vorliegen, obgleich andererseits eine solche auch gegeben sein kann. Bei der zwischen diesen beiden Möglichkeiten tatsächlich zu wählende Ausführung muss ein Kompromiss zwischen optimaler Geräuschvermeidung und einer Möglichkeit des Öffnens der Klappe ohne die Gefahr einer Dichtungsbeschädigung bei Temperaturen unterhalb des Gefrierpunktes gefunden werden.

Durch die erfindungsgemäße Stufen- bzw. in noch verbesserter Ausführung Sägezahnform der zweiten Dichtung wird nicht nur eine Schneefront von der eigentlichen Dichtfläche zwischen der zweiten Dichtung und der Klappe abgehalten, sondern auch von der Scheibe abfließendes Wasser sowie von der dort an die zweite Dichtung angrenzende Feuchtigkeit. Bei einer sägezahnförmigen Ausbildung der zweiten Dichtung wird eine besonders gute Trennung zwischen den von der Scheibe in Richtung des Wasserführungskanales hintereinander liegenden Dichtungsstegen erreicht. In dem zwischen den Stufen bzw. Sägezähnen liegenden jeweiligen Talbereich kann Wasser, das die erste Stufe überschritten hat, noch vor einem Ansteigen an der zweiten Stufe gut abfließen. Im Grunde lässt sich durch die erfindungsgemäße Ausgestaltung der zweiten Dichtung eine Art Labyrinthdichtung erreichen. Eine derartige Dichtungsart ist besonders gut geeignet, beim Öffnen der Klappe die Beschädigung einer vereisten zweiten sowie gegebenenfalls dritten Dichtung sicher zu vermeiden. Dies liegt daran, dass Labyrinthdichtungen nach dem Prinzip einer anlagefreien Dichtung wirken.

Die erfindungsgemäße Ausgestaltung eines Spaltes zwischen einer Scheibe und einem Klappenrand eignet sich mit Bezug auf eine Fahrgeräuschverminderung selbstverständlich besonders gut am Heck eines Fahrzeuges. Mit Bezug auf eine bei Temperaturen unter dem Gefrierpunkt beschädigungsfrei zu öffnende Dichtung in einem Spalt zwischen einer Scheibe und einer Klappe kann die Erfindung auch an der Windschutzscheibe eines Fahrzeuges an dem durch den Kofferraumdeckel gebildeten Spalt vorgesehen werden.

Ein besonders vorteilhaftes, nachstehend noch näher erläutertes Ausführungsbeispiel ist in der Zeichnung dargestellt.

In dieser zeigen:

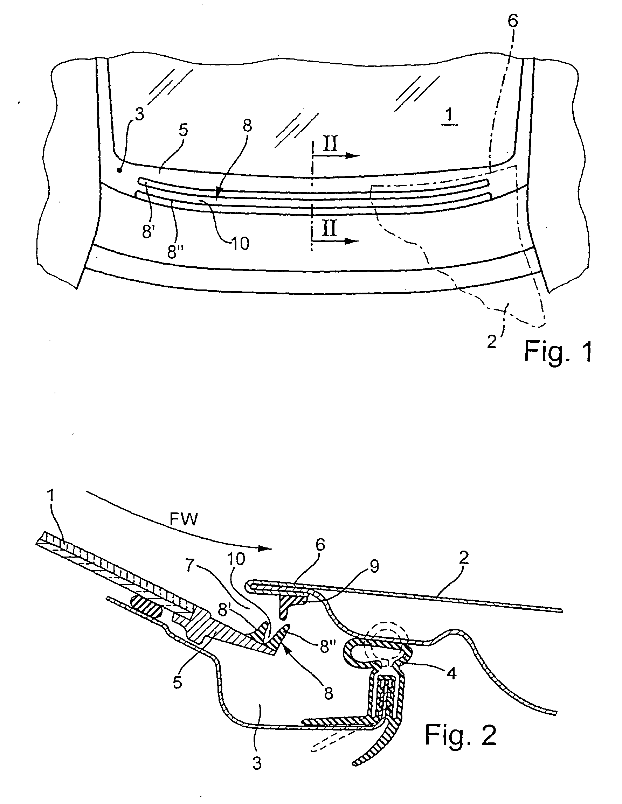

- Fig. 1: eine Draufsicht auf einen Ausschnitt aus der Heckpartie eines Kraftfahrzeuges in dem Übergangsbereich zwischen einer geneigten Heck-Scheibe und einer gegenüber dieser über einen Spalt beabstandeten Heck-Klappe,
- Fig. 2: einen Schnitt durch den Spaltbereich zwischen Heck-Scheibe und Klappe nach Linie 11-11 in Fig. 1.

Zwischen einer etwa um 45° gegenüber der horizontalen geneigten Heck-Scheibe 1 und einem lediglich geringfügig gegenüber der Horizontalen in der gleichen Richtung wie die Heck-Scheibe geneigten Heck-Klappe 2 befindet sich ein Wasserführungskanal 3. Gegenüber diesem Wasserführungskanal 3 ist die Scheibe 1 an ihrer Unterseite gedichtet. In dem gezeichneten Ausführungsführungsbeispiel befindet sich die Klappe 2 in geschlossenem Zustand, in dem sie über eine erste Dichtung 4 gegenüber dem Wasserführungskanal 3 gedichtet ist.

Die Scheibe 1 besitzt an ihrem unteren Ende einen angespritzten Ansatz 5, der frei in den Wasserführungskanal 3 hineinragt. Ein hinterer Klappenrand 6 überlappt den Ansatz 5, wodurch zwischen dem Ansatz 5 und dem Klappenrand 6 ein oberhalb des Ansatzes 5 liegender, offener Spalt 7 gegeben ist. In diesen Spalt 7 kann bei Fahrbetrieb des Fahrzeuges Fahrtwind FW in den Wasserführungskanal 3 eindringen und ohne eine Dichtungsmaßnahme innerhalb dieses Spaltes 7 zu unerwünschten Fahrgeräuschen führen.

Zu einem möglichst weitgehenden Verschluss des Spaltes 7 ist an dem äußeren, freien Ende des Ansatzes 5 eine zweite Dichtung 8 vorgesehen. Diese zweite Dichtung 8 ist in Längsrichtung des Spaltes von dessen Enden beabstandet. Im Querschnitt besitzt die zweite Dichtung 8 eine Art Sägezahnprofil mit einem ersten Sägezahn 8' und einem zweiten Sägezahn 8" . Der zweite Sägezahn 8" besitzt eine gegenüber dem ersten Sägezahn 8' größere Höhe in Richtung der Spaltweite. Zwischen den beiden Sägezähnen 8', 8" verläuft eine zu ihren Enden hin offene Längsrille 10.

An dem Klappenrand 6 ist für ein Zusammenwirken mit der zweiten Dichtung 8 eine dritte Dichtung 9 vorgesehen. Die zweite Dichtung 8 und die dritte Dichtung 9 sind formmäßig derart aufeinander abgestimmt, dass die freien Kanten des zweiten Sägezahnes 8" und der dritten Dichtung 9 sich bei geschlossener Klappe 2 in Spaltweitenrichtung überlappen, wobei der Sägezahn 8" dem Wasserführungskanal 3 und die dritte Dichtung 9 der Scheibe 1 zugewandt sind. In dem Überlappungsbereich liegt in dem gezeichneten Ausführungsbeispiel keine dichte Anlage der zweiten und dritten Dichtung 8, 9 vor. Dies ist allerdings alternativ möglich.

Zur Funktion des Dichtungssystems aus der zweiten und dritten Dichtung 8, 9 ist folgendes zu bemerken.

Im Falle eines Vorhandenseins von in den vorderen Bereich des Spaltes 7 eingedrungenem Schnee wird die Schneefront von dem ersten Sägezahn 8' der zweiten Dichtung 8 abgestützt, das heißt der erste Sägezahn 8' wirkt in der Art eines Schneezaunes. Hierdurch wird der eigentliche Bereich zwischen den freien Enden des zweiten Sägezahnes 8' der zweiten Dichtung 8 und der dritten Dichtung 9 schnee- und damit vereisungsfrei gehalten. In der Art eines Schneezaunes kann der erste Sägezahn 8' dadurch wirken, dass Schnee in gewissem Sinne eine kompakte Konsistenz aufweist und daher auf einer von dem ersten Sägezahn 8' erzeugten Frontebene gehalten werden kann.

Von der Scheibe 1 abfließendes Wasser kann bereits von dem ersten Sägezahn 8' aufgefangen und seitlich direkt in den Wasserführungskanal 3 abgeleitet werden. Der zweite Sägezahn 8' kann auf diese Weise feuchtigkeits- und wasserfrei gehalten werden, wodurch sich bei Temperaturen unter dem Gefrierpunkt keine Vereisung zwischen der zweiten Dichtung 8 und der dritten Dichtung 9 einstellen kann, die bei einem Öffnen der Klappe 2 zu einer die Beschädigung der Dichtsystemelemente 8, 9 führen könnte.

Alle in der Beschreibung und in den nachfolgenden Ansprüchen dargestellten Merkmale können sowohl einzeln als auch in beliebiger Form miteinander erfindungswesentlich sein.

## Patentansprüche

1. Übergangsbereich zwischen einer Scheibe (1) und einer beabstandet angrenzenden Klappe (2) eines Kraftfahrzeuges, insbesondere einer Heck-Scheibe und Heckklappe, mit einem gegenüber der geschlossenen Klappe (2) durch eine erste Dichtung (4) gedichteten Wasserführungskanal (3) und einem über die erste Dichtung (4) gegenüber der Scheibe (1) auskragenden Klappenrand (6) mit einem zwischen diesem Klappenrand (6) und der Scheibe (1) bestehenden, den Wasserführungskanal (3) mit den Außenbereichen der Scheibe (1) verbindenden Spalt (7), **gekennzeichnet durch** die Merkmale
- der zwischen dem Klappenrand (6) und der Scheibe (1) liegende Spalt (7) ist bei geschlossener Klappe (2) **durch** eine zweite Dichtung (8) in einem zwischen den Längsenden des Spaltes (7) liegenden Spaltbereich, der zumindest einen Teilbereich der gesamten Spaltweite erfasst, verschlossen,
- die zweite Dichtung (8) schließt dicht an den von der Scheibe (1) gebildeten Spaltrand an,
- die zweite Dichtung (8) ist in Richtung von der Scheibe (1) zum Wasserführungskanal (3) hin gegenüber dem auskragenden Klappenrand (6) ansteigend ausgebildet.

2. Übergangsbereich nach Anspruch 1,
**dadurch gekennzeichnet,**
**dass** die zweite Dichtung (8) stufenförmig ansteigend ausgebildet sind.

3. Übergangsbereich nach Anspruch 1 oder 2,
**dadurch gekennzeichnet,**
**dass** der am weitesten innerhalb des Spaltes (7) liegende Bereich der zweiten Dichtung (8) bei geschlossener Klappe (2) dicht an dem auskragenden Klappenrand (6) anliegt.

4. Übergangsbereich nach Anspruch 2 oder 3,
**dadurch gekennzeichnet,**
**dass** die zweite Dichtung (8) zweistufig ausgebildet ist.

5. Übergangsbereich nach einem der Ansprüche 2 bis 4,
**dadurch gekennzeichnet,**
**dass** die einzelnen Stufen (8', 8") der zweiten Dichtung (8) in Richtung von der Scheibe (1) zu dem Wasserführungskanal (2) hin voneinander über jeweils einen zu den Enden des Spaltes (7) hin frei auslaufende Längsrille (10) beabstandet sind.

6. Übergangsbereich nach einem der vorhergehenden Ansprüche,
**dadurch gekennzeichnet,**
**dass** die der zweiten Dichtung (8) zugeordnete Anlagefläche des auskragenden Klappenrandes (6) zumindest teilweise als eine dritte Dichtung (9) ausgebildet ist.

7. Übergangsbereich nach einem der vorhergehenden Ansprüche,
**dadurch gekennzeichnet,**
**dass** die zweite Dichtung (8) an der geschlossenen Klappe (2) einen von der Klappe (2) ausgehenden Dichtkantenbereich in Richtung des Wasserführungskanals (3) mit oder ohne Abstand überlappt.
